(19) Europäisches Patentamt
European Patent Office
Office européen des brevets

(11) EP 0 864 996 A2

(12) EUROPEAN PATENT APPLICATION

(43) Date of publication:
16.09.1998 Bulletin 1998/38

(51) Int. Cl.⁶: G06K 19/00

(21) Application number: 98104471.2

(22) Date of filing: 12.03.1998

(84) Designated Contracting States:
AT BE CH DE DK ES FI FR GB GR IE IT LI LU MC NL PT SE
Designated Extension States:
AL LT LV MK RO SI

(30) Priority: 13.03.1997 JP 58795/97

(71) Applicant: Hitachi, Ltd.
Chiyoda-ku, Tokyo 101-0062 (JP)

(72) Inventors:
• Ohki, Masaru
  Tokorozawa-shi (JP)
• Sakaguchi, Takahiro
  Akishima-shi (JP)
• Sato, Kazutaka
  Kashiwa-shi (JP)

(74) Representative:
Beetz & Partner
Patentanwälte
Steinsdorfstrasse 10
80538 München (DE)

(54) Portable electronic device and method for personal identification

(57) A method for identifying a person using biometric information is provided. A portable electronic device (10) such as an IC card stores feature values of the biometric information as registered data. When a user enters the biometric information of his own into a data processing device (20) such as IC card terminal, the data processing device extracts feature values about the inputted biometric information and sends it to the portable electronic device. The portable electronic device matches the features inputted by the data processing device to the registered data for performing personal identification. For reducing the processing load burdened on the portable electronic device, the portable electronic device entrusts part of the processing to the data processing device. This allows the portable electronic device and the data processing device to work in concert.

FIG. 1

10 PORTABLE ELECTRONIC DEVICE

## Description

## BACKGROUND OF THE INVENTION

### FIELD OF THE INVENTION

The present invention relates to a personal identification of a portable electronic device representatively like an IC card and a personal identification and an electronic signature executed through a network like an internet. For example, the present invention may be adapted to a safe electronic money which a malignant person cannot falsely use or electronic transactions such as cash-less shopping, online shopping and home banking.

### DESCRIPTION OF THE RELATED ART

Today, for identifying a specific individual when withdrawing money from his or her bank amount or purchasing a good, a card with a magnetic stripe for storing information (referred to as a magnetic card) is widely used. When someone withdraws cash from an automatic teller machine with his or her cash card, a personal identification number is pressed for identifying him or her. When purchasing a good with a credit card, the match of a signature written on the back side of the credit card to an actual signature written at the purchasing time is executed for the personal identification.

It has been pointed that these types of personal identifications involve some bottlenecks in security. If someone steals another person's cash card and its personal identification number, the stealer can easily withdraw money from the bank account. The credit card may be also used by the stealer if the stealer imitatatively writes the owner's signature of the credit card.

To overcome these bottlenecks, proposals have been presented wherein an IC card is used in place of the magnetic card because the IC card has a far larger storage for information than the magnetic card. The IC card thus may store biometric information such as a fingerprint, a retina pattern or voice so that the biometric information is used for the personal identification. Many of those proposals have been presumed that the personal identification based on the biometric information is processed in an IC card terminal, because it needs a considerable amount of processing load. This type of processing, however, involves some bottlenecks in security, such as outflow of individual registered data and the relatively easy transform of an identification program for the IC card terminal by the third person.

Then, the "Personal Identification System" disclosed in JP-A-61-199162 has proposed an idea of using a fingerprint as a secret code and doing extraction of features and matching of the fingerprint with the IC card. However, the data processing performance of the IC card is remarkably low for the personal identification based on the biometric information, so that the IC card cannot substantially reach the realization of the personal identification thereon.

Further, as for the business transactions or election through an internet, credit information is transferred on the internet together with the personal identification. In this case, by encrypting the credit information, the security of the information is improved. However, it is difficult to determine if the credit information is truly about the identical person and it is transferred on real time.

## SUMMARY OF THE INVENTION

It is an object of the present invention to provide a portable electronic device having far larger storage for information than a magnetic card and a system for identifying a person based on biometric information that cannot be easily stolen or imitated, in particular, the system for identifying a person which keeps the security higher by inhibiting the outflow of the biometric information stored in the portable electronic device.

It is a further object of the present invention to provide a highly securable system for identifying a person which is arranged to complete the personal identification about the information transferred from the portable electronic device through an external network and certify the information is transferred within a predetermined time.

The portable electronic device according to the invention includes a memory for storing feature values of first biometric information as registered data, an transmit/receive interface for receiving as features feature values of second biometric information to be identified from a data processing device, and a processor for comparatively matching the registered data to the features.

In the method for identifying a person based on the biometric information according to the invention, the data processing device operates to extract the feature values from the biometric information inputted thereto and send the extracted feature values to the portable electronic device as the features. The portable electronic device operates to match the features to the registered data corresponding to the feature values of the biometric information stored in the memory. Further, the portable electronic device performs part of the matching process through the effect of the data processing device, thereby reducing the load burdened on the hardware.

These and other objects, features and advantages of the present invention will become more apparent in view of the following detailed description of the preferred embodiments in conjunction with accompanying drawings.

## BRIEF DESCRIPTION OF THE DRAWINGS

Fig. 1 is a block diagram showing an arrangement of a portable electronic device;

Fig. 2 is a block diagram showing an arrangement of a data processing device;

Fig. 3 is a block diagram showing relation among the portable electronic device, the data processing device and an external information processing device;

Fig. 4 is a block diagram showing a process for identifying a person according to a first embodiment of the present invention;

Fig. 5 is a block diagram showing a process for identifying a person according to a second embodiment of the present invention;

Fig. 6 is a block diagram showing a process for identifying a person according to a third embodiment of the present invention;

Fig. 7 is a block diagram showing a process for identifying a person according to a fourth embodiment of the present invention;

Fig. 8 is a block diagram showing a process for identifying a person according to a fifth embodiment of the present invention;

Fig. 9 is a diagram showing an arrangement of an input device in the case of using a fingerprint as biometric information;

Fig. 10 is a block diagram showing a method for extracting features of a fingerprint;

Fig. 11 is a view showing a method for creating registered data of the fingerprint;

Fig. 12 is a view showing a method for positioning the registered data to the features based on the data for positioning and matching both of them to each other;

Fig. 13 is an explanatory view showing forecast processing for matching the registered data to the features;

Fig. 14 is a view showing an operation of getting difference data from the registered data and the features and generating cryptographic data;

Fig. 15 is a block diagram showing a method for matching speakers to each other in the case of using voice as the biometric information;

Fig. 16 is a view showing the registered data and the features in the case of using the voice as the biometric information;

Fig. 17 is a chart showing a DP matching method for matching the speakers to each other; and

Fig. 18 is a chart showing a DP matching for matching the speakers to each other according to the present invention.

## DESCRIPTION OF THE PREFERRED EMBODIMENTS

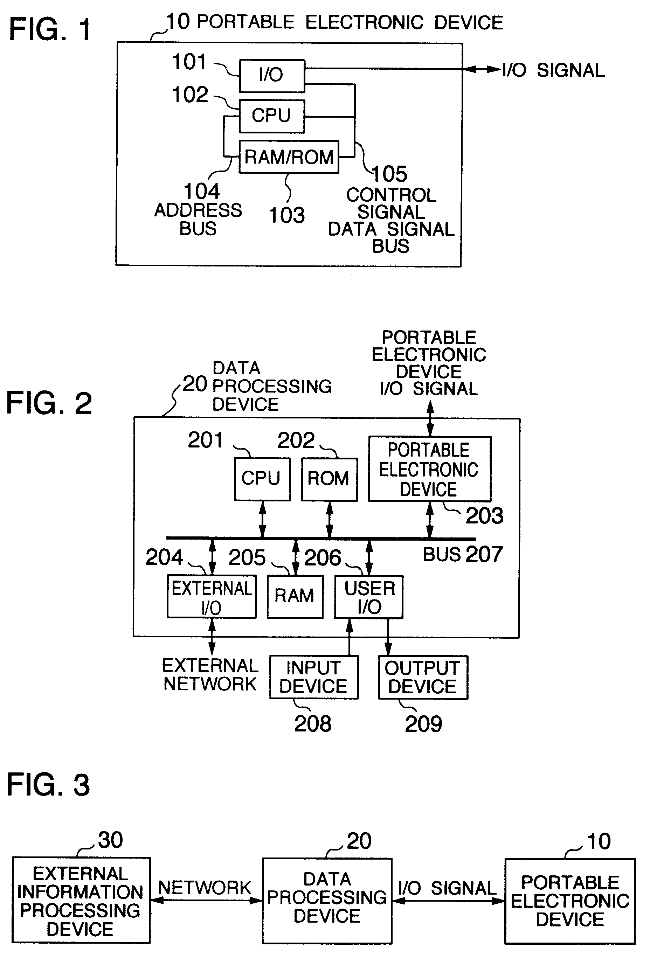

Fig. 1 shows an arrangement of a portable electronic device representatively such as an IC card. The portable electronic device 10 includes a CPU 102 for controlling the whole of the portable electronic device 10, a RAM/ROM 103 for storing an application program and data, and an I/O 101 for performing communications between the portable electronic device 10 and the external. Some part of RAM/ROM may be constructed by EEPROM (Electronic Erasable Programmable Read Only Memory). EEPROM can keep data without electronic power, and can change the data. The CPU 102 is connected to the RAM/ROM 103 through an address bus 104. The CPU 102, the RAM/ROM 103 and the I/O 101 are all connected through a control and data bus 105. The CPU 102 receives an I/O signal from the external through the I/O 101, executes the application program on the RAM/ROM 103, and write the executed result in the RAM/ROM 103 or output to the external through the I/O 101.

The portable electronic device 10 is arranged to seal the overall hardware components (101 to 105) and the software stored in the RAM/ROM 103 in one chip. Or, the portable electronic device 10 is a tamper-resistant device by providing a function of deleting the software if a user gives a certain operation to the portable electronic device. The tamper-resistant device becomes preferable to the portable electronic device used for the fields such as electronic transactions to be applied to the present invention if the device provides a function of preventing the software from being falsified by the user.

Fig. 2 shows an arrangement of the data processing device 20 representatively such as an IC card terminal and an IC card reader. The data processing device 20 includes a CPU 201 for executing a program, a RAM 205 for storing the program to be executed and the data, a ROM 202 for initial program booting, a portable electronic device I/O 203 for communicating information with the portable electronic device, an external I/O 204 for communicating information with an external network, an input device (such as a keyboard or pin pad) 208 connected to the data processing device 20, and a user I/O 206 for controlling an output device (such as a display or a speaker) 209. Those components are connected through a bus 207.

As shown in Fig. 3, the data processing device 20 is connected to the portable electronic device 10 through an I/O signal line. The data processing device 20 enables to communicate information with an external information processing device 30 through a network such as an internet.

The CPU and the RAM/ROM included in the portable electronic device representatively like the IC card is generally lower in performance than the CPU and the RAM/ROM included in the data processing device (such as the IC card terminal or the IC card reader), because the hardware of the portable electronic device is implemented compactly and the restrictions are imposed thereon by power supply and heat radiation.

(1) Embodiment 1

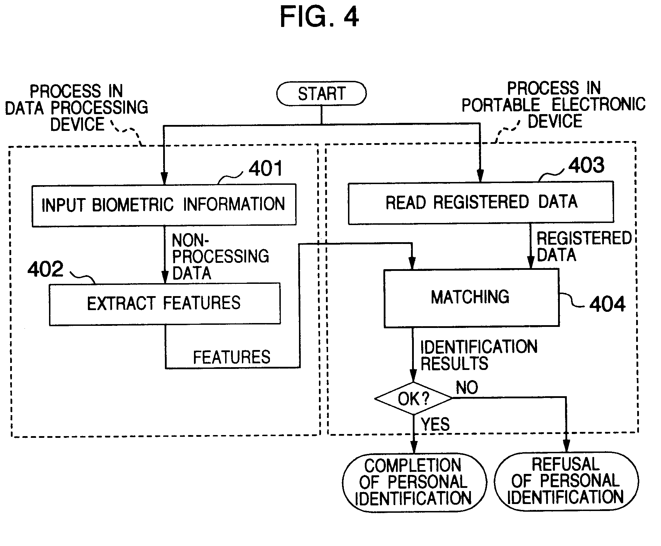

Fig. 4 is a flowchart showing a system for identifying a personal according to a first embodiment of the present invention. The process of this embodiment contains the process executed by the portable electronic device 10 and the data processing device 20.

The data processing device 20 is inputted with biometric information such as a fingerprint, a retina pattern, voice or handwriting from the input device 208 (step 401). The features of the inputted non-processing data are extracted by the CPU 201 (step 402). The extracted features are sent to the portable electronic device 10.

The portable electronic device 10 operates to read the registered data from the RAM/ROM 103 (step 403). The features sent from the data processing device 20 and the registered data are matched to each other by the CPU 102 (step 404). If the identification results are true, the personal identification is normally terminated. Then, the following process is executed. If the identification results are false, the personal identification is refused. The following process is not executed.

According to the processing of this embodiment, the personal identification can be realized safely and quickly, because the heavy process for extracting the features of the biometric information (non-processing data) is executed by the data processing device with a large CPU performance without outputting the biometric information (registered data) registered in the portable electronic device.

Herein, the description will be oriented to a method for registering in the portable electronic device the data in the case of using the fingerprint as the biometric information. The fingerprint is registered by the data processing device shown in Fig. 2.

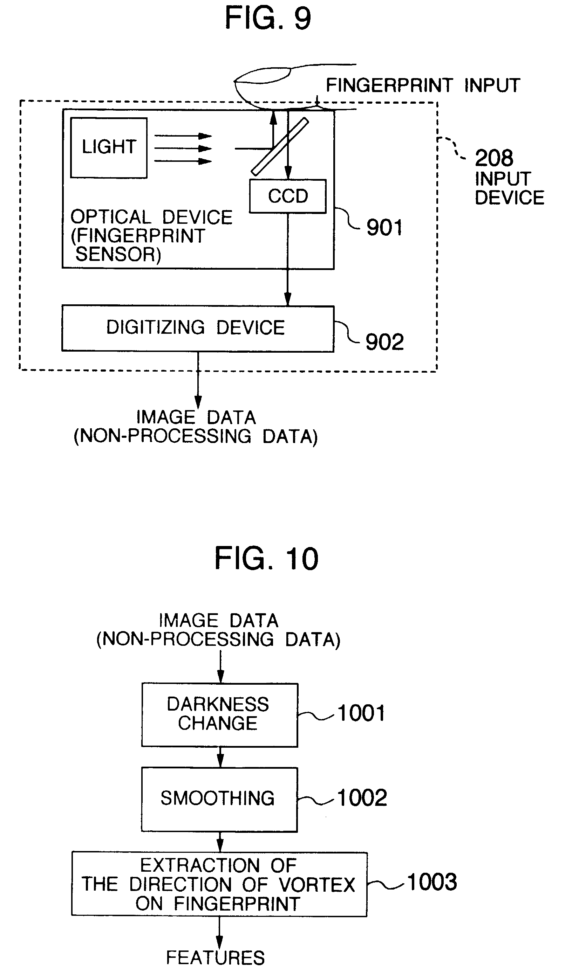

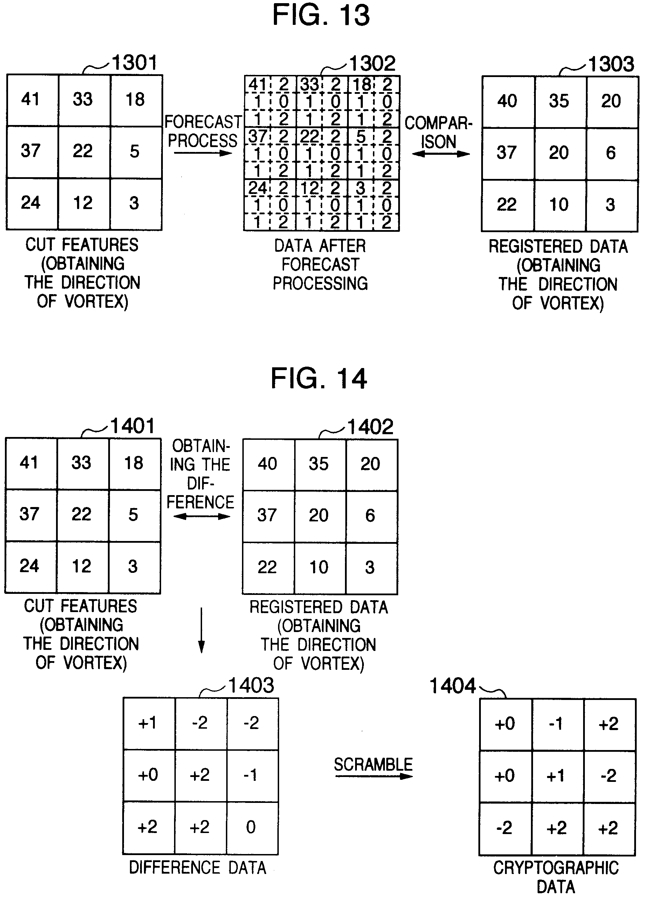

As shown in Fig. 9, an input device 208 through which a user inputs his or her fingerprint includes an optical unit (such as a fingerprint sensor mainly composed of a CCD camera) 901 and a digitizing unit 902 for digitizing image data read from the optical unit 901. The digitized image data (non-processing data) is inputted into the data processing device 20. The CPU 201 executes a program for extracting the features from the inputted non-processing data for facilitating the matching of the biometric information. Various kinds of methods for extracting the features have been proposed. The extracting method thus does not restrict the present invention. For example, the present invention may utilize the method described in Minami et al. "Development of New Security System for Matching Fingerprint", Electronics, 1988, September. As shown in Fig. 10, this method is executed to perform various processes such as change of the darkness of image data (step 1001), smoothing (step 1002), and extraction of the direction of vortex on fingerprint (step 1003). An example of the fingerprint pattern is shown in Fig. 11 and those processes will be discussed in detail.

The change of the darkness of image data 1001 is a process for changing a tone (the so-called number of colors) of the non-processing data 1101 to a lower value. For example, the tone is changed from 256 colors of the non-processing data to 32 colors. The smoothing 1002 is a process for eliminating acnodes, because the fingerprint data involves few abrupt changes of tone and a strong correlation between the adjacent pixels from a viewpoint of picture quality. The resulting picture is sectioned into lattice areas, and the direction of vortex on the fingerprint is extracted on each lattice area. The pattern in the direction of vortex extracted from each lattice area is specified as the features 1102.

The area around the features 1102 normally contain lots of noises caused by optical distortion of an input device. The feature positions of the fingerprint that are useful of matching corresponds to the center area of the features with complicate parts. Then, the center area containing lots of feature positions of the features is cut out, and the cut features 1103 are sent to the portable electronic device 10. The portable electronic device 10 stores the cut features 1103 as the registered data in the RAM/ROM 103.

(2) Embodiment 2

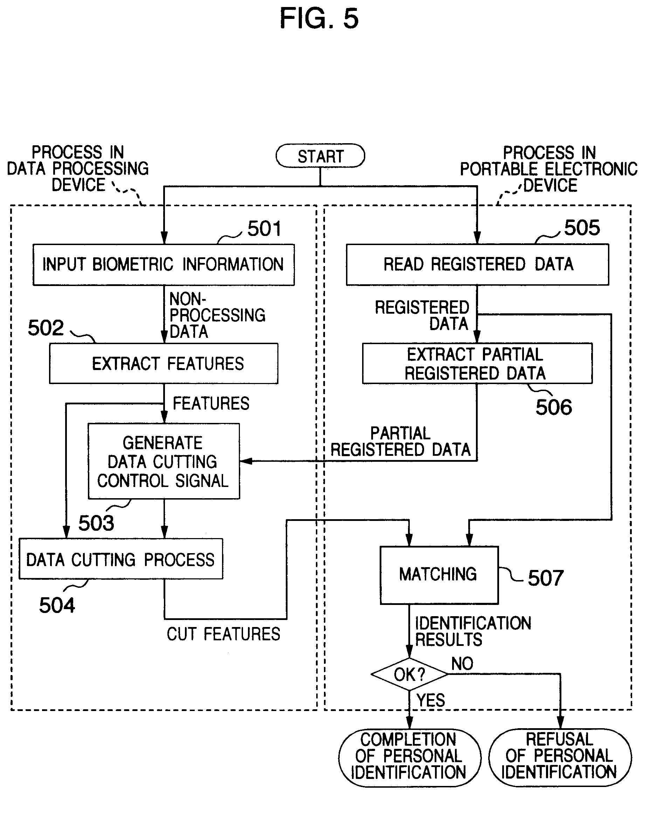

Fig. 5 is a flowchart showing a system for identifying a person according to a second embodiment of the present invention. In this embodiment, the data processing device executes part of processing of the portable electronic device according to the first embodiment for reducing the load burdened on the processing on the portable electronic device.

The biometric information is inputted from the input device 208 into the data processing device 20 (step 501). Then, the features of the inputted non-processing data are extracted (step 502). The portable electronic device 10 operates to read the registered data stored in the RAM/ROM 103 (step 505), cut out part of the read registered data (step 506), and send the cut part of the registered data to the data processing device 20.

The data processing device 20 operates to generate a data cutting control signal from the features and the part of the registered data sent from the portable electronic device (step 503), cut out the features (step 504), and send the features to the portable electronic device 10. The portable electronic device 10 operates to match the cut features to the registered data through the effect of the CPU 102 (step 507). If the identification results are true, the personal identification is terminated normally. Then, the following process is executed. If the identification results are false, the personal identification is refused. Then, the following process is not executed.

The process for identifying a person according to the second embodiment will be discussed in detail. For matching the pre-registered data to the features of the biometric information inputted as an object of identification, it is necessary to perform the two processes of (a) normalizing the registered data and the features (positioning if the biometric information is specific to a fingerprint) and (b) matching the registered data to the features. In the second embodiment, the normalizing process is executed by the data processing device 20 and the matching process is executed by the portable electronic device 10. The portable electronic device 10 extracts the minimum part of the registered data required for normalization from the registered data. Then, the normalized (positioned) features are sent to the portable electronic device 10 for matching them to the registered data. Hence, if a malignant person gets the part of the registered data outputted from the portable electronic device and registers it in another portable electronic device, the person cannot be identified as an identical person of the original registered data.

Taking the fingerprint data shown in Fig. 12 as an example, the flow of matching according to the second embodiment will be discussed in detail. The picture data 1204 of the fingerprint to be identified is inputted from the input device 208 into the data processing device 20, in which the extracting process is executed for getting the features 1205.

On the other hand, the portable electronic device 10 operates to read the registered data 1201 and create the partial registered data 1201 for positioning. In the example shown in Fig. 12, the four corners of the registered data 1202 are cut out as the partial registered data 1202. The partial registered data 1202 for positioning may not be limited unless the registered data is likely to be stolen. Hence, it is preferable to cut out the peripheral portion of the registered data that does not contain many of the features of the fingerprint and cut out plural portions by considering the rotation of the data to be matched.

The cut partial registered data 1202 is sent to the data processing device 20. The data processing device 20 generates a data cutting control signal from the features 1205 and the partial registered data 1202. The data cutting control signal is a signal for indicating the portion of the features 1205 matched to the registered data 1203. For example, it is represented as the coordinates corresponding to the four corners of the registered data 1301. The data processing device 20 operates to cut out the features 1205 according to the data cutting control signal. Hence, a square with four pieces of the data for positioning 1202 as four corners (cut features 1206) is cut out.

The cut features 1206 are sent to the portable electronic device 10 in which the features are matched to the registered data 1203.

In the second embodiment, the data processing device with a high CPU performance executes the large amount of process for normalizing without the outflow of the registered data of the biometric information stored in the portable electronic device. Hence, the data processing device can realize the personal identification safely and quickly.

(3) Embodiment 3

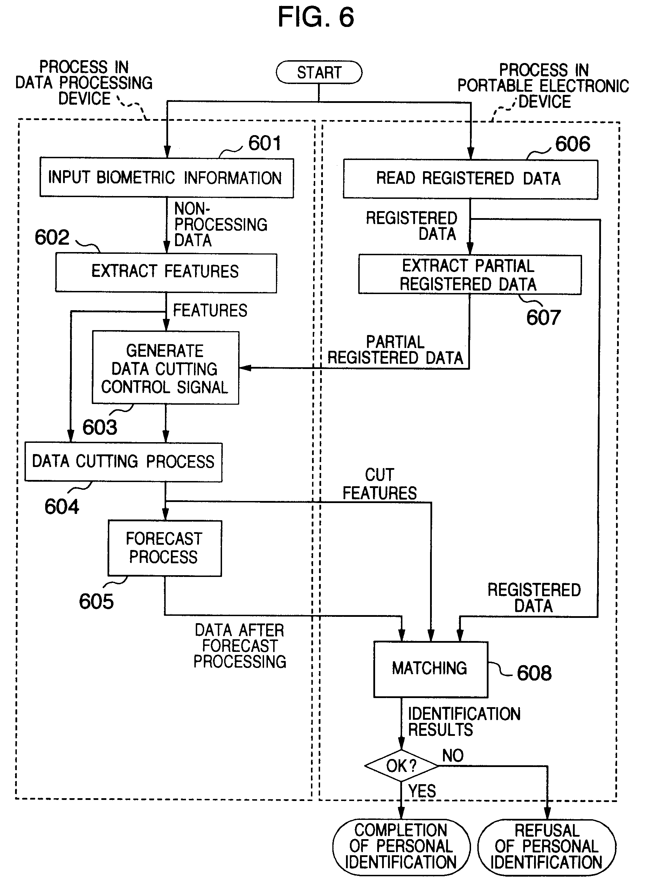

Fig. 6 is a flowchart showing a system for identifying a person according to a third embodiment of the present invention.

The biometric information is inputted from the input device 208 into the data processing device 20 (step 601). The data processing device 20 operates to extract the features of the inputted non-processing data through the effect of the CPU 201 for getting the features (step 602). The portable electronic device 10 operates to read the registered data from the RAM/ROM 103 (step 606), cut out part of the registered data (step 607), and send the partial registered data to the data processing device 20.

The data processing device 20 operates to generate a data cutting control signal from the features and the partial registered data sent from the portable electronic device (step 603) and cut out the features based on the data cutting control signal (step 604). Then, the forecast processing is executed about the cut features (step 605). The cut features and the data after forecast processing are sent to the portable electronic device 10. The portable electronic device 10 executes the matching comparison among the cut features, the data after forecast processing and the registered data through the effect of the CPU 102 (step 608). If the identification results are true, the personal identification is terminated normally. Then, the following process is executed. If the identification results are false, the personal identification is refused. The following process is not executed.

As an example of the use of the fingerprint as the biometric information, the third embodiment will be described in more detail.

As has been described with respect to the second embodiment, the matching process contains (a) the normalizing process and (b) the comparing process. The third embodiment is arranged to reduce the processing burden put on the portable electric device in the comparing process. The comparison of the registered data with the features is generally executed by calculating the distance between both of the data and making the decision on the magnitude of the distance. The amount of operations depends on a function of the distance. The portable electronic device with a poor hardware performance may suffer from the larger processing load.

According to this embodiment, focusing attention on the respect that the input data is located close to the registered data if the input data to be identified is the data of the identical person, the cut features are shifted in a closer range before the forecast distance is calculated.

Fig. 13 shows the concrete example. For simplifying it, the pattern in the direction of vortex composing the features is represented by a unit vector with an angle with an x axis as a°. The features are represented by a. Herein, it is assumed that the cut features 1301 are (41, 33, 18, 37, 22, 5, 24, 12, 3).

The data processing device 20 takes neighboring values of "-2, -1, 0, +1, +2" for obtaining the absolute values of "2, 1, 0, 1, 2". The pre-calculated result about the closer range allowed for each feature is the data after forecast processing 1302.

The portable electronic device 10 receives the data after forecast processing 1302. Based on the first features "41" and the close data "2, 1, 0, 1, 2" corresponding thereto, if the registered data train is "40, 35, 20, 37, 20, 8, 28, 10, 5", the first registered data is "40". Hence, it is compared with the features "41". The difference is "-1". As a result, a value of "1" can be obtained from the data after forecast processing "2, 1, 0, 1, 2". Likewise, the comparison of the registered data with the cut features is executed in series. The distances from the corresponding data after forecast processing are obtained in series and then are accumulatively added. The accumulated result corresponds to the difference between the registered data and the cut features. If this value is smaller than a threshold value, it is determined that the registered data is identical with the cut features.

As described above, in the portable electronic device 10, the data processing device 20 performs an operation of comparing the registered data with the cut features and obtaining a distance from the data after forecast processing in a table lookup manner, for performing the identification processing.

Herein, the description has been expanded as an example of the one-dimensional features. If the number of dimensions is increased or whatever function of distance may be used, the portable electronic device 10 may reduce the operational load.

(4) Embodiment 4

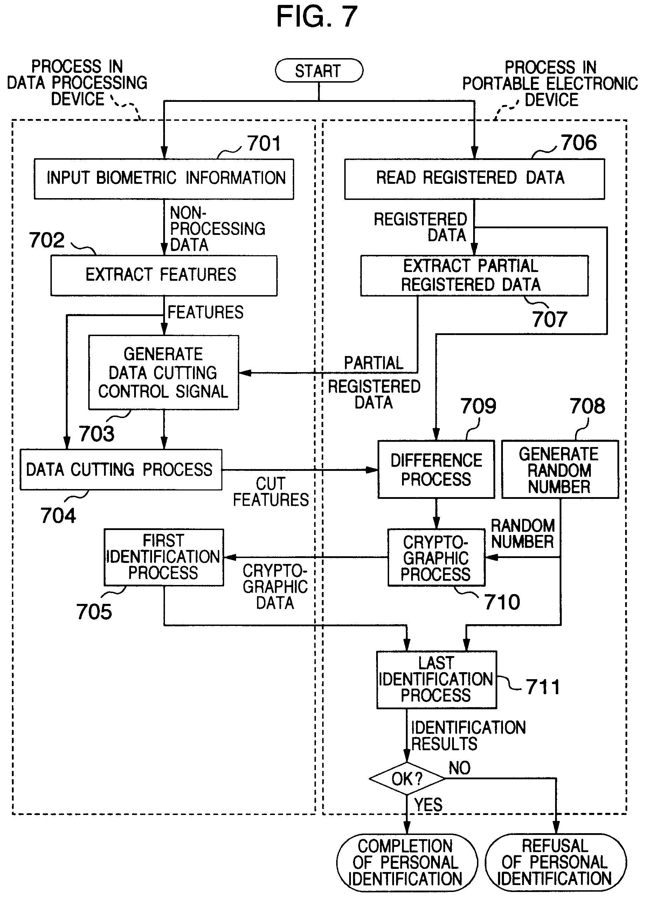

Fig. 7 is a flowchart showing a system for identifying a person according to a fourth embodiment of the invention.

The biometric information is inputted from the input device 208 into the data processing device 20. The data processing device 20 operates to extract the features of the inputted non-processing data through the effect of the CPU 201 for obtaining the features. The portable electronic device 10 reads the registered data out of the RAM/ROM 103. The processes at steps 701 to 704 in the data processing device and the processes at steps 706 and 707 in the portable electronic device are likewise to those described with respect to the embodiments 2 and 3. In the fourth embodiment, the operation is executed to calculate a difference between the registered data and the features sent to the data processing device 20 (step 709). Then, the cryptographic processing changes the difference data to the cryptographic data by using the random number generated at the step 708 (step 710). Next, the cryptographic data is sent to the data processing device 20.

The data processing device 20 operates to perform the first identification processing about the features and the cryptographic data (step 705). The data after the first identification processing is sent to the portable electronic device 10. The portable electronic device 10 operates to perform the last identification processing by using the data after the first identification processing and the generated random number (step 711). If the identified results are true, the personal identification is terminated normally. Then, the following process is executed. If the identified results are false, the personal identification is refused. The following process is not executed.

As an example of the use of the fingerprint as the biometric information, the fourth embodiment will be described in more detail.

Like the third embodiment, the present embodiment is intended to reduce the processing burden of the portable electronic device in the comparing. Also in this embodiment, the operation of obtaining the distance is performed by the data processing device. The operated result is inputted to the portable electronic device in which it is subject to the last identification processing.

As shown in Fig. 14, the portable electronic device 10 operates to obtain difference data 1403 between the extracted features 1401 and the registered data 1402. If the vector in the direction of vortex of the features is completely identical with the vector in the direction of vortex of the registered data, the difference data 1403 is made to be zero vector. In general, it is not made to be zero vector because the features contain lots of errors. If the difference data 1403 is sent to the data processing device without changing it, the registered data 1402 is inversely calculated. Hence, the difference data 1403 is scrambled by using the random number (the sequence of data is rearranged at random). The resulting data is sent as the cryptographic data 1404 to the data processing device. This scrambling may prevent the registered data from being inversely calculated.

The data processing device 20 operates to obtain an absolute value of the cryptographic data generated by the portable electronic device 10. (The absolute value of the difference of an angle is set as a distance). The absolute value is sent to the portable electronic device 10. The portable electronic device 10 receives the calculated distances and accumulatively adds them. The accumulated result corresponds to the difference between the registered data and the cut features. Hence, the accumulative value is compared with a threshold value (last identification), if it is smaller than the threshold value, it is determined that the registered data is identical with the cut features.

For simplification, the description has been expanded with an example of using a one-dimensional angle as data. In actual, however, it goes without saying that the multi-dimensional data such as two-dimensional data (for example, a coordinate of a vector endpoint) may be used. Further, in the case that the difference data is scrambled with the random number, if the scrambled result has the same dimension as the registered data, the registered data may be unwillingly inferred by repetitively sending zero vectors and unit vectors from the data processing device 20. For the scrambling, more dimensions may be given to the cryptographic data by using the random number to prevent the unwilling inference.

Further, the normalizing process is executed by the data processing device. However, if the portable electronic device has inadequate hardware performance, the features are transmitted to the portable electronic device without changing them, in which the normalization and the difference process can be executed.

(5) Embodiment 5

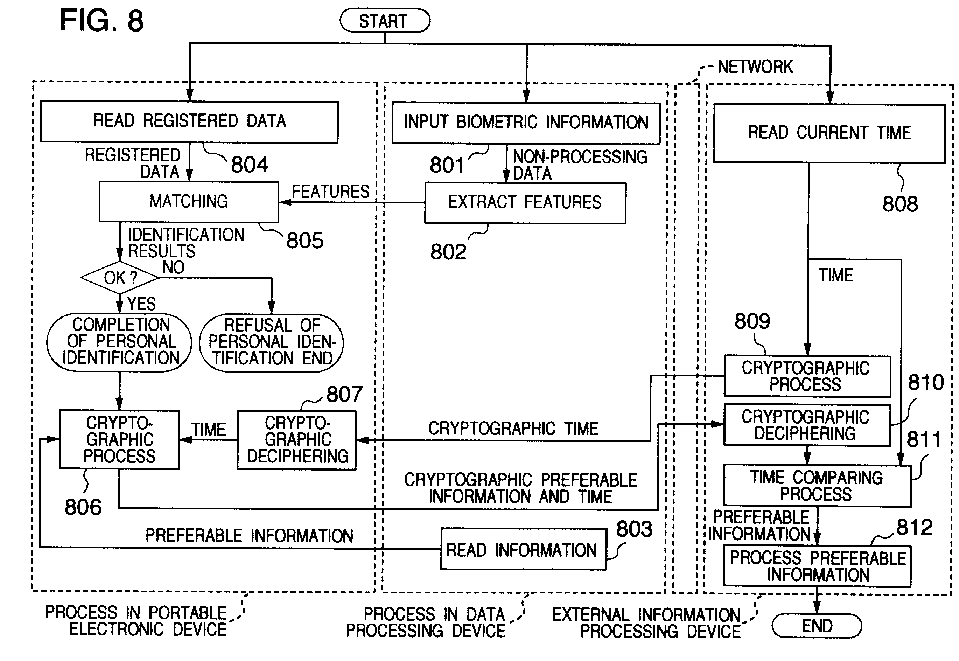

Fig. 8 is a flowchart showing a personal identification system according to a fifth embodiment of the present invention. This embodiment is an implementation of the personal identification system with high security in the environment where a data processing device is connected to an external network. In this embodiment, the data processing device 20 is connected to a network such as the internet. The network is connected to external information processing apparatuses 30 such as computers (for example, a host computer of a service provider).

The biometric information is inputted from the input device 208 to the data processing device 20 (step 801). The data processing device 20 operates to extract the features of the inputted non-processing data through the effect of the CPU 201 for obtaining the features (step 802) and send the features to the portable electronic device 10. The portable electronic device 10 operates to read the registered data from the RAM/ROM 103 (step 804) and match the registered data to the features coming thereto (step 805). If the identification results are true, the personal identification is terminated normally. Then, the following process is executed. If the identification results are false, the personal identification is refused. The following process is not executed. The foregoing first to fourth embodiments may be applied to this matching process.

Herein, the information such as money or request for transactions in electronic transactions is inputted to the data processing device 20 by the user. The data processing device 20 operates to read the inputted information (step 803) and send it to the portable electronic device 10. The external information processing device 30 is triggered by the input of the information to the data processing device by the user or the completion of personal identification in the portable electronic device to read the current time (step 808), perform the cryptographic process (step 809), and send the cryptographic data to the portable electronic device 10 through the network. The portable electronic device 10 operates to cryptographic decipher the cryptographic time (step 807) and cryptograph the coming time and the preferable information (step 806). The cryptographic information is passed through the data processing device 20 and is sent to the external information processing device 30 through the network. The external information processing device 30 operates to cryptographic decipher (step 810). If the time sent thereto is identical with the time sent by the user himself (step 811), it is determined that the coming information is correct. Then, the proper information processing such as the electronic business transactions is carried out (step 812).

The personal identification system according to this embodiment is a system arranged so that the external information processing device 30 recognizes the person for processing the transfer is identical with the person registered in the portable electronic device 10 if the information is transferred from the data processing device to the external information processing device 30 in response to an indication given by the external information processing device 30. That is, the personal identification according to the invention makes it possible to prevent misuse of the portable electronic device by a malignant person, that is, replacement of a true user with a malignant user and the falsification by the data processing device 20 by sending back the time sent from the external information processing device 30 to the portable electronic device 10 together with the relevant information.

This system thus proves that the very person registered in the portable electronic device 10 exists over the network at the time. By using this characteristic, it is possible to provide a system that is effective in competition or election on the network required for the processing within a certain length of time.

The foregoing description has been expanded along the arrangement where the data processing device sends the necessary information. The similar process may apply to the information registered in the portable electronic device or the information saved in the data processing device. Moreover, the system can optionally specify the timing when the external information processing device reads the current time (step 808). Further, though the system is arranged so that the external information processing device sends the current time to the portable electronic device, the sending of the random number in place of the time may offer the same effect unless a specific request is issued for processing the data within a certain length of time.

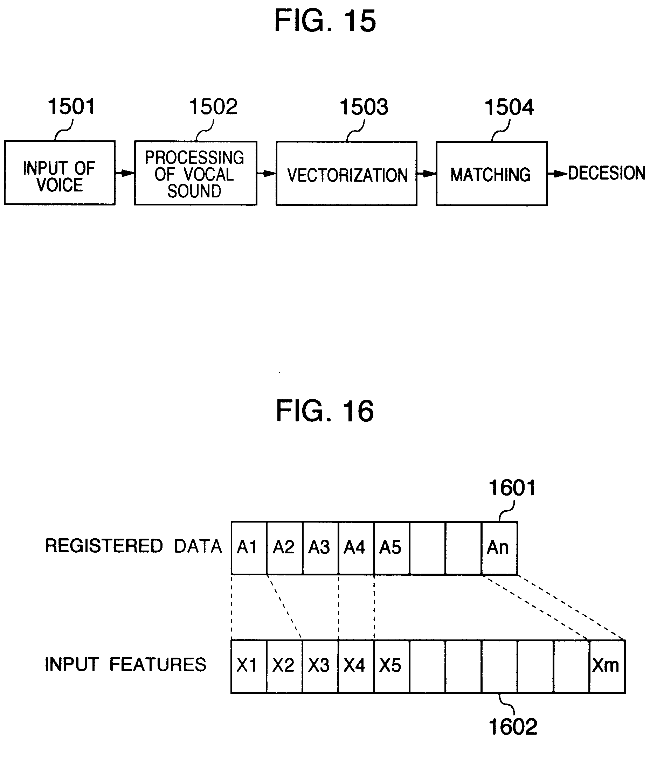

The first to the fifth embodiments have been described in detail. The description has been expanded as taking an example of the use of the fingerprint as the biometric information. Of course, except the fingerprint, the other kind of biometric information rather than the fingerprint may be used only if it may be expanded in the two-dimensional plane. That is, a retina pattern, a palm pattern, a lineament, and vector-formative data such as handwriting or voiceprint may be used for implementing the present invention merely by changing the input process and the algorithm of extracting the features. The method for identifying a personal (matching of speakers) with voice as the biometric information will be described with reference to Figs. 15 to 18.

Fig. 15 is a flowchart for matching the speakers. At first, the voice is inputted (step 1501) and then the inputted voice is changed into a vocal sound (processing of vocal sound, step 1502). The vocal sound means the feature values of the voice and is based on the spectrum analysis of the voice. The processing of vocal sound based on the spectrum analysis may be implemented by using an LPC cepstrum described in Seiichi Nakagawa, "Voice Recognition based on Probability Model", pages 10 to 12 (issued by the Institute of Electronics, Information and Communication Engineers). After this processing of vocal sound 1502, the processed voice is vectorized (step 1503). By vectorizing the features of the voice, the calculation is made more efficient. These processes 1502 and 1503 correspond to the process of extracting the features in the case of using the voice as the biometric information. Moreover, the portable electronic device 10 registers the vectorized features of the voice as the registered data. The vectorized features of the voice are matched to the features of the voice inputted to the data processing device 20. As shown in Fig. 16, the features of the voice are represented as the time series of the feature vector. The registered data is represented as $(A_1, A_2, ... A_n)$. The feature data of the inputted voice is represented as $(X_1, X_2, ... X_m)$.

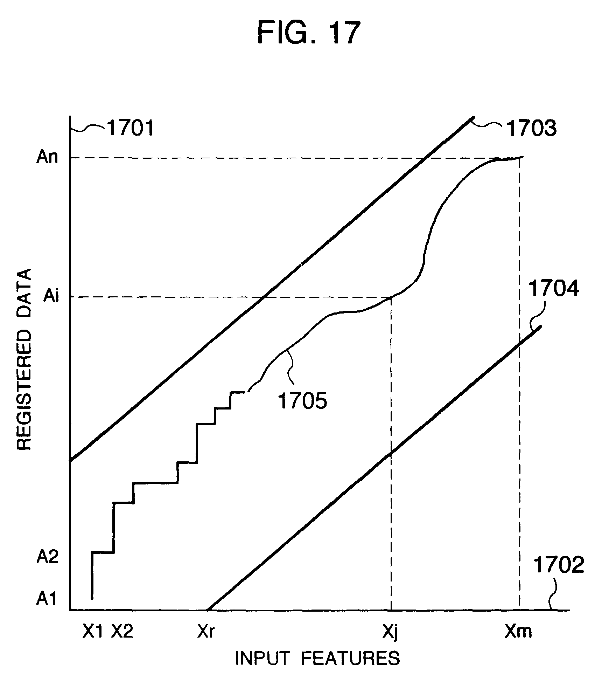

As the matching process (step 1504), the DP (Dynamic Programming) matching technique or the HMM (Hidden Markov Model) technique may be used. The matching by the DP matching technique will be described with reference to Fig. 17. Since the voice is expanded or shrunk on time, the matching is required to allow the change of time. The DP matching technique is executed to obtain the time series of the combination $(A_i, X_j)$ $(1 \leq i \leq n, 1 \leq j \leq m)$ in which an accumulative distance between $A_i$ and $X_j$ is made minimum and to compare the accumulative distance with a given reference value for the purpose of implementing the matching comparison.

As described above, the DP matching technique is required to calculate the accumulative distance about many combinations of time series. Hence, the range of combinations is limited to a specific range for the purpose of reducing the amount of calculations. This specific range is called a matching window. Concretely, the accumulative distance is calculated only about the combinations located between a line 1703 and a line 1704 shown in Fig. 17.

The operation is executed to compare the distance of $(A_1, X_j)$ $(1 \leq j \leq r)$, extract M combination candidates with smaller distances and calculate the accumulative distance of the distance $(A_2, X_j)$ at the next time and M combination candidates for narrowing down the candidates. The series of processes are repeated. Finally, the combinations for minimizing the accumulative distance are extracted from the time series of the combination $(A_i, X_j)$. For example, $(A_1, X_1)$, $(A_1, X_2)$, $(A_2, X_3)$, $(A_3, X_3)$, $(A_4, X_4)$, ... $(A_n, X_m)$ are extracted. The details of the DP matching technique is discussed in Keinichi Mori, "Pattern Recognition" (issued by the Institute of Electronics, Information and Communication Engineers), pages 117 to 119.

In matching the speakers, as mentioned above, the calculations of the accumulative distance about the time series of the combinations give the portable electronic terminal so large a processing load that the portable electronic terminal cannot easily process the calculations. Hence, focusing on the general phenomenon that the features vary less on the middle of the voicing though the features vary more in the beginning of the voicing, though it is necessary to enlarge the matching window in the beginning, it is possible to do the matching process if the matching window is relatively narrowed down on the middle of the voicing. That is, the matching process in the first half of the voicing is executed by the data processing device (which corresponds to the "extraction of data" described with respect to the fifth embodiment), while the second half of the voicing is executed by the portable electronic device. For performing the first half of matching, though the partial registered data is sent from the portable electronic device to the data processing device, the part except it is disallowed to be outflown.

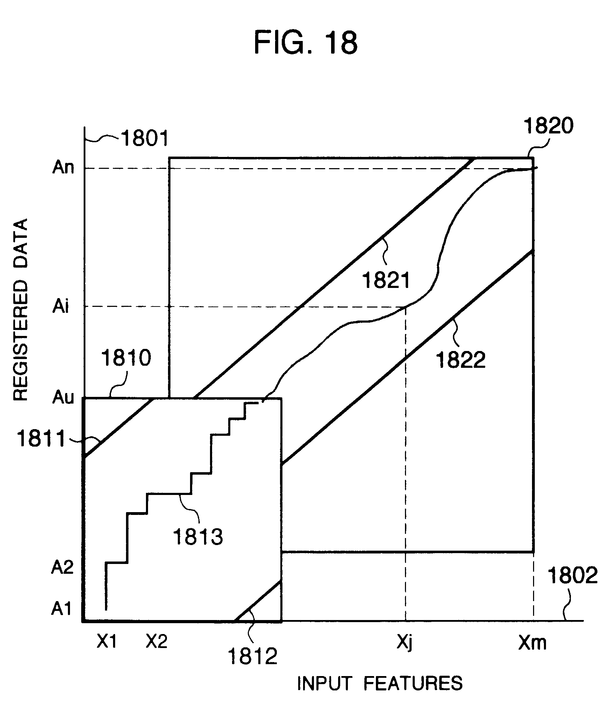

This will be concretely described with reference to Fig. 18. The portable electronic device operates to send the registered data $A_i$ $(1 \leq i \leq u)$ to the data processing device in which the registered data $A_i$ is matched to the features. The matching range is limited to the range indicated by a square 1810. In this case, the matching window is wide and actually corresponds to the range located between lines 1811 and 1812. The identification results in the matching range 1810 are sent to the portable electronic device, in which the matching process is executed about $A_i$ $(u+1 \leq i \leq n)$. The matching range of the portable electronic device is made to be a square 1820. The matching range 1820 corresponds to the range located between lines 1821 and 1822. The matching process of the portable electronic device is executed to narrow down the matching window rather than the matching process of the data processing device, for the purpose of reducing the calculating load.

Further, the processes corresponding to the foregoing third and fourth embodiments are executed for reducing the amount of calculations to be done by the portable electronic device. As described about the embodiment 3, the distance between the features $X_j$ and its neighbors $Y_k$ $(1 \leq k \leq 1)$ is assumed to be the data after forecast processing. The operation is executed to select $Y_k$ matching to $A_i$ and set the distance of the pre-calculated $(Y_k, X_j)$ as the forecast processing as the distance of $(A_i, X_j)$. These operations result in being able to obtain the time series of the combination $(A_i, X_j)$

for minimizing the accumulative distance.

In correspondence with the difference processing of the fourth embodiment, the difference of the combination $(A_i, X_j)$ is taken as the time series meeting the matching window and is encrypted for calculating the distance of the combination $(A_i, X_j)$ as the first personal identification. The minimum accumulative distance is selected from the accumulative distances obtained by the last identification processing and is matched to a threshold value.

The foregoing method for matching the feature vector sequences is effective in matching of the hand-writing as well.

While the present invention has been described above in conjunction with the preferred embodiments, one of ordinary skill in the art would be enabled by this disclosure to make various modifications to this embodiment and still be within the scope and spirit of the invention as defined in the appended claims.

**Claims**

1.   A portable electronic device (10) comprising:

a memory (103) for storing feature values of first biometric information as registered data; a transmit/receive interface (101) for receiving as features feature values of second biometric information to be identified from a data processing device; and a processor (102) for comparing said registered data with said features.

2.   The portable electronic device as claimed in claim 1, wherein said portable electronic device is a tamper-resistant device.

3.   The portable electronic device as claimed in claim 1, wherein said biometric information is any one of fingerprint, retina pattern, voice and handwriting.

4.   A data processing device (20) for personal identification of a portable electronic device for holding feature values of first biometric information as registered data, comprising:

a first transmit/receive interface (206) for receiving second biometric information converted into a digital signal as non-processing data; a processor (201) for extracting feature values from said non-processing data; and a second transmit/receive interface (203) for sending said extracted feature values to said portable electronic device as the features of said second biometric information.

5.   A method for performing personal identification of a portable electronic device through the effect of a data processing device and said portable electronic device for holding feature values of first biometric information as registered data, comprising the steps of:

in said data processing device, extracting feature values of second biometric information inputted thereto (402) and sending said extracted feature values as features to said portable electronic device; and in said portable electronic device, matching said features to said registered data (404).

6.   A method for performing personal identification of a portable electronic device through the effect of a data processing device and said portable electronic device for holding feature values of first biometric information as registered data, comprising the steps of:

in said portable electronic device, cutting part of said registered data (506) and sending said cut partial registered data to said data processing device; in said data processing device, extracting feature values as features from second biometric information inputted thereto (502), and normalizing said features with said partial registered data (504) and sending said normalized features to said portable electronic device; in said portable electronic device, matching said normalized features to said registered data (507).

7.   A method for performing personal identification as claimed in claim 6, wherein said data processing device cuts out a part of said features corresponding to said registered data held in said portable electronic device (504) and sends said cut features as said normalized features to said portable electronic device.

8.   A method for performing personal identification of a portable electronic device through the effect of a data processing device and said portable electronic device for holding feature values of first biometric information as registered data, comprising the steps of:

in said portable electronic device, cutting out part of said registered data (506) and sending said cut partial registered data to said data processing device; in said data processing unit, extracting feature values as features from second biometric information inputted thereto (502), positioning said features to the registered data held in said portable electronic device by using said features and said partial registered data (503), and sending said features and said information for positioning to said portable electronic device; and

in said portable electronic device, matching said features to said registered data based on said information for positioning (507).

9. The method for performing personal identification as claimed in claim 8, wherein said data processing device cuts out a part of said features corresponding to said registered data held in said portable electronic device by said positioning (504) and sends said cut features to said portable electronic device.

10. The method for performing personal identification as claimed in claim 8, wherein said data processing device performs a first identification processing of matching said features to said partial registered data (503) and sends said first identification results and said features to said portable electronic device, and

said portable electronic device performs a second identification of matching said features to a part of said registered data except said partial registered data (507).

11. The method for performing personal identification as claimed in claim 10, wherein said matching is executed by comparing a given threshold value with a minimum value of an accumulative distance D of a distance $d_{ij}$ ($1 \leq i \leq n$, $1 \leq j \leq m$) of a combination of any one of said registered data $A_i$ ($1 \leq i \leq n$) and any one of said features $X_j$ ($1 \leq j \leq m$), and

a range of the combination of said partial registered data $A_i$ ($1 \leq i \leq u$) and said features $X_j$ to be calculated in said first matching is set to be wider than a range of a combination of $A_i$ ($u+1 \leq i \leq n$) of the part of said registered data except said partial registered data and said features $X_j$ in said second identification processing.

12. The method for performing personal identification as claimed in claim 10, wherein said biometric information is voice or handwriting.

13. A method for performing personal identification of a portable electronic device through the effect of a data processing device and said portable electronic device for holding feature values of first biometric information as registered data, comprising the steps of:

in said data processing device, extracting the feature values as features from second biometric information inputted thereto (602), calculating a distance between said features and given number of neighbors (605), and sending said features and said calculated distance to said portable electronic device, and

in said portable electronic device, selecting any one of said neighbors matched to said registered data and matching said features to said registered data by using a distance between said selected neighbor and said features (608).

14. The method for performing personal identification as claimed in claim 13, wherein said portable electronic device cuts out part of said registered data (606) and sends said cut partial registered data to said data processing device, and

said data processing device positions said features to said registered data held in said portable electronic device by using said features and said partial registered data (603), and sends said features and said information for positioning to said portable electronic device.

15. The method for performing personal identification as claimed in claim 14, wherein said data processing device calculates a distance between the part of said features corresponding to said registered data held in said portable electronic device to given number of neighbors based on said information for positioning (605) and sends said features and said calculated distance to said portable electronic device.

16. The method for performing personal identification as claimed in claim 14, wherein said data processing device performs a first identification processing of matching said features to said partial registered data (603) and sends said features and said first identification results to said portable electronic device, and

said portable electronic device selects any one of said plural neighbors matched to the part of said registered data except said partial registered data, based on said first identification results, and performs a second identification processing by using distance between said selected neighbor and said features (608).

17. A method for performing personal identification of a portable electronic device through the effect of a data processing device and said portable electronic device for holding an amount of features of first biometric information as registered data, comprising the steps of:

in said data processing device, extracting the feature values as features from second biometric information inputted thereto (702) and sending said features to said portable electronic device;

in said portable electronic device, calculating difference data between said features and said registered data (709), cryptographing said calculated difference data (710) and then sending said cryptographic data to said data processing device; and

in said data processing device, performing a first identification processing of matching said features to said registered data based on said cryptographic difference data (705) and sending said identification results to said portable electronic device; and

in said portable electronic device, deciphering said first identification results and performing a second identification processing (711).

18. The method for performing personal identification as claimed in claim 17, wherein said portable electronic device scrambles said difference data by using generated random numbers generated thereby, sends said scrambled difference data to said data processing device, and deciphers said first identification results sent from said data processing device by using said random numbers.

19. The method for performing personal identification as claimed in claim 17, wherein said portable electronic device cuts out part of said registered data (707) and sends said cut partial registered data to said data processing device, and

said data processing device positions said features to said registered data held in said portable electronic device by using said features and said partial registered data (703) and sends said features and the information for positioning to said portable electronic device.

20. The method for performing personal identification as claimed in claim 19, wherein said data processing device cuts out a part of said features corresponding to said registered data held in said portable electronic device by said positioning (704) and sends said cut features to said portable electronic device, and

said portable electronic device calculates difference data between said cut features and said registered data (709).

21. The method for performing personal identification as claimed in claim 19, wherein said data processing device performs a first matching processing by using said features and said partial registered data (703) and sends said features and first matching results to said portable electronic device, and

said portable electronic device calculates difference data between said features and a part of said registered data except said partial registered data, cryptographs said calculated difference data (710), and sends said cryptographic data to said data processing device,

said data processing device performs first identification processing of second matching processing using said registered data and said features based on the cryptographic difference data (705) and sends the first identification results to said portable electronic device, and

said portable electronic device deciphers said first identification results and performs a second identification processing of said second matching processing (711).

22. A method for performing personal identification of a portable electronic device through the effect of said portable electronic device for holding feature values of first biometric as registered data and a data processing device connected to an external information processing device through a network, comprising the steps of:

in said portable electronic device, receiving an input of feature values of second biometric information from said data processing device, matching said registered data to said features (805), and determining if the personal identification is successful based on said matching results;

when said personal identification is successful, in said portable electronic device, receiving first information cryptographed and sent by said external information processing device; and

in said portable electronic device, adding second information required for a predetermined process to said received first information, cryptographing the added information (806) and sending the cryptographic data to said external information processing device.

23. The method for performing personal identification as claimed in claim 22, wherein said external processing device deciphers the information sent from said portable electronic device and executes the foregoing predetermined process if said first information in the deciphed information is identical with first information sent to said portable electronic device from said external processing device.

24. The method for performing personal identification as claimed in claim 22, wherein said external processing device sends a current time as said first information.

FIG. 1

10 PORTABLE ELECTRONIC DEVICE

101 I/O → → I/O SIGNAL

102 CPU

RAM/ROM

104
ADDRESS
BUS

103

105
CONTROL
SIGNAL
DATA SIGNAL
BUS

FIG. 2

20 DATA PROCESSING DEVICE

PORTABLE ELECTRONIC DEVICE I/O SIGNAL

201 CPU    202 ROM

PORTABLE ELECTRONIC DEVICE

203

BUS 207

204    205    206

EXTERNAL I/O    RAM    USER I/O

EXTERNAL NETWORK

INPUT DEVICE

OUTPUT DEVICE

208    209

FIG. 3

30
EXTERNAL INFORMATION PROCESSING DEVICE

NETWORK

20
DATA PROCESSING DEVICE

I/O SIGNAL

10
PORTABLE ELECTRONIC DEVICE

# FIG. 4

PROCESS IN
DATA PROCESSING
DEVICE

START

PROCESS IN
PORTABLE ELECTRONIC
DEVICE

401

INPUT BIOMETRIC INFORMATION

403

READ REGISTERED DATA

NON-
PROCESSING
DATA

REGISTERED
DATA

402

EXTRACT FEATURES

MATCHING

404

FEATURES

IDENTIFICATION
RESULTS

OK?

NO

YES

COMPLETION
OF PERSONAL
IDENTIFICATION

REFUSAL
OF PERSONAL
IDENTIFICATION

# FIG. 5

PROCESS IN
DATA PROCESSING
DEVICE

START

PROCESS IN
PORTABLE ELECTRONIC
DEVICE

~501

INPUT BIOMETRIC INFORMATION

~505

READ REGISTERED DATA

NON-
PROCESSING
DATA

502 ~

EXTRACT FEATURES

REGISTERED
DATA

EXTRACT PARTIAL
REGISTERED DATA

506

FEATURES

GENERATE
DATA CUTTING
CONTROL SIGNAL

PARTIAL
REGISTERED DATA

503

DATA CUTTING PROCESS

MATCHING ~507

504

CUT FEATURES

IDENTIFICATION
RESULTS

OK? NO

YES

COMPLETION
OF PERSONAL
IDENTIFICATION

REFUSAL
OF PERSONAL
IDENTIFICATION

# FIG. 6

PROCESS IN
DATA PROCESSING
DEVICE

( START )

PROCESS IN
PORTABLE ELECTRONIC
DEVICE

601

INPUT BIOMETRIC INFORMATION

NON-
PROCESSING
DATA

602

EXTRACT FEATURES

FEATURES

GENERATE
DATA CUTTING
CONTROL SIGNAL

603

DATA CUTTING PROCESS

604

FORECAST
PROCESS

605

DATA AFTER
FORECAST
PROCESSING

606

READ REGISTERED DATA

REGISTERED
DATA

EXTRACT PARTIAL
REGISTERED DATA

607

PARTIAL
REGISTERED DATA

CUT
FEATURES

REGISTERED
DATA

MATCHING 608

IDENTIFICATION
RESULTS

OK?  NO
YES

COMPLETION
OF PERSONAL
IDENTIFICATION

REFUSAL
OF PERSONAL
IDENTIFICATION

16

# FIG. 7

PROCESS IN
DATA PROCESSING
DEVICE

( START )

PROCESS IN
PORTABLE ELECTRONIC
DEVICE

701

INPUT BIOMETRIC INFORMATION

NON-
PROCESSING
DATA

702

EXTRACT FEATURES

FEATURES

GENERATE
DATA CUTTING
CONTROL SIGNAL

703

DATA CUTTING PROCESS

704

CUT
FEATURES

FIRST
IDENTIFICATION
PROCESS

705

CRYPTO-
GRAPHIC
DATA

706

READ REGISTERED DATA

REGISTERED
DATA

EXTRACT PARTIAL
REGISTERED DATA

707

PARTIAL
REGISTERED
DATA

709

DIFFERENCE
PROCESS

708

GENERATE
RANDOM
NUMBER

RANDOM
NUMBER

CRYPTO-
GRAPHIC
PROCESS

710

LAST
IDENTIFICATION
PROCESS

711

IDENTIFICATION
RESULTS

OK? — NO

YES

COMPLETION
OF PERSONAL
IDENTIFICATION

REFUSAL
OF PERSONAL
IDENTIFICATION

17

# FIG. 8

START

**PROCESS IN PORTABLE ELECTRONIC DEVICE**

READ REGISTERED DATA — 804

REGISTERED DATA

MATCHING — 805

FEATURES

IDENTIFICATION RESULTS

OK ?

NO → REFUSAL OF PERSONAL IDENTIFICATION END

YES → COMPLETION OF PERSONAL IDENTIFICATION

CRYPTO-GRAPHIC PROCESS — 806

PREFERABLE INFORMATION

TIME

CRYPTO-GRAPHIC DECIPHERING — 807

**PROCESS IN DATA PROCESSING DEVICE**

INPUT BIOMETRIC INFORMATION — 801

NON-PROCESSING DATA

EXTRACT FEATURES — 802

CRYPTOGRAPHIC TIME

CRYPTOGRAPHIC PREFERABLE INFORMATION AND TIME

READ INFORMATION — 803

**EXTERNAL INFORMATION PROCESSING DEVICE**

NETWORK

READ CURRENT TIME — 808

TIME

CRYPTOGRAPHIC PROCESS — 809 / 810

CRYPTOGRAPHIC DECIPHERING — 811

TIME COMPARING PROCESS

PREFERABLE INFORMATION — 812

PROCESS PREFERABLE INFORMATION

END

18

# FIG. 9

FINGERPRINT INPUT

LIGHT

CCD

OPTICAL DEVICE
(FINGERPRINT
SENSOR)

901

208
INPUT
DEVICE

DIGITIZING DEVICE

902

IMAGE DATA
(NON-PROCESSING DATA)

# FIG. 10

IMAGE DATA
(NON-PROCESSING DATA)

DARKNESS
CHANGE

1001

SMOOTHING

1002

EXTRACTION OF
THE DIRECTION OF VORTEX
ON FINGERPRINT

1003

FEATURES

# FIG. 13

~1301

| 41 | 33 | 18 |
|----|----|----|
| 37 | 22 | 5 |
| 24 | 12 | 3 |

CUT FEATURES
(OBTAINING
THE DIRECTION
OF VORTEX)

FORECAST
PROCESS
→

~1302

| 41 | 2 | 33 | 2 | 18 | 2 |
|----|---|----|---|----|---|
| 1 | 0 | 1 | 0 | 1 | 0 |
| 1 | 2 | 1 | 2 | 1 | 2 |
| 37 | 2 | 22 | 2 | 5 | 2 |
| 1 | 0 | 1 | 0 | 1 | 0 |
| 1 | 2 | 1 | 2 | 1 | 2 |
| 24 | 2 | 12 | 2 | 3 | 2 |
| 1 | 0 | 1 | 0 | 1 | 0 |
| 1 | 2 | 1 | 2 | 1 | 2 |

DATA AFTER
FORECAST
PROCESSING

COMPAR-
ISON
↔

~1303

| 40 | 35 | 20 |
|----|----|----|
| 37 | 20 | 6 |
| 22 | 10 | 3 |

REGISTERED DATA
(OBTAINING
THE DIRECTION
OF VORTEX)

# FIG. 14

~1401

| 41 | 33 | 18 |
|----|----|----|
| 37 | 22 | 5 |
| 24 | 12 | 3 |

CUT FEATURES
(OBTAINING
THE DIRECTION
OF VORTEX)

OBTAIN-
ING THE
DIF-
FERENCE
↔

~1402

| 40 | 35 | 20 |
|----|----|----|
| 37 | 20 | 6 |
| 22 | 10 | 3 |

REGISTERED DATA
(OBTAINING
THE DIRECTION
OF VORTEX)

↓

~1403

| +1 | -2 | -2 |
|----|----|----|
| +0 | +2 | -1 |
| +2 | +2 | 0 |

DIFFERENCE DATA

SCRAMBLE
→

1404~

| +0 | -1 | +2 |
|----|----|----|
| +0 | +1 | -2 |
| -2 | +2 | +2 |

CRYPTOGRAPHIC
DATA

# FIG. 15

| 1501 | 1502 | 1503 | 1504 |
|------|------|------|------|
| INPUT OF VOICE | PROCESSING OF VOCAL SOUND | VECTORIZATION | MATCHING |

→ DECESION

# FIG. 16

1601

REGISTERED DATA | A1 | A2 | A3 | A4 | A5 | | | An |

INPUT FEATURES | X1 | X2 | X3 | X4 | X5 | | | | | | Xm |

1602

# FIG. 17

# FIG. 18